# FASCICULE DE BREVET EUROPEEN

(11) **EP 2 821 813 B1**
(45) Date de publication et mention de la délivrance du brevet: **15.07.2020**
(21) Numéro de dépôt: 14174786.5
(22) Date de dépôt: 27.06.2014
(51) Int. Cl.: G01T 3/00

(54) **Dispositif de détection de neutrons**
Vorrichtung zum Nachweis von Neutronen
Device for the detection of neutrons

(30) Priorité: 01.07.2013 FR 1356374
(43) Date de publication de la demande: 07.01.2015
(73) Titulaire: COMMISSARIAT À L'ÉNERGIE ATOMIQUE ET AUX ÉNERGIES ALTERNATIVES, 75015 Paris (FR)
(72) Inventeur: Giomataris, Ioannis, 78000 Versailles (FR); Gerbier, Gilles, 91300 Massy (FR); Papaevangelou, Thomas, 91430 Igny (FR); Savvidis, Ilias, 63077 Kassandra (GR)
(74) Mandataire: Lebkiri, Alexandre

(56) Documents cités:
- EP-A1- 0 030 929
- EP-A1- 2 290 405
- EP-A1- 2 492 711
- WO-A2-2012/115516
- WO-A2-2014/113158
- FR-A- 1 192 749
- GB-A- 1 359 322
- US-A- 3 311 770
- US-A- 3 678 275
- US-A- 4 300 050
- US-A- 4 970 391
- KIM H S ET AL: "Performance of a high-pressure xenon ionization chamber for environmental radiation monitoring", RADIATION MEASUREMENTS, ELSEVIER, AMSTERDAM, NL, vol. 43, no. 2-6, 1 février 2008 (2008-02-01), pages 659-663, XP022733885, ISSN: 1350-4487, DOI: 10.1016/J.RADMEAS.2007.12.040 [extrait le 2008-01-05]
- PSZONA S ET AL: "Effect of cavity size on the sensitivity of a TE-walled, TE-gas-filled ionisation chamber for fast neutrons", PHYSICS IN MEDICINE AND BIOLOGY, INSTITUTE OF PHYSICS PUBLISHING, BRISTOL GB, vol. 27, no. 8, 1 August 1982 (1982-08-01) , pages 1015-1022, XP020022550, ISSN: 0031-9155, DOI: 10.1088/0031-9155/27/8/003

## Description

### DOMAINE TECHNIQUE

La présente invention concerne un dispositif de détection de neutrons.

### ETAT DE LA TECHNIQUE ANTERIEUR

Un détecteur de neutrons sphérique comporte généralement une première électrode qui forme une enceinte en forme de sphère creuse. Cette première électrode contient une deuxième électrode en forme de bille qui est maintenue au centre de la première électrode grâce à une canne de maintien. La première électrode est reliée à la masse, tandis que la deuxième électrode est portée à un haut potentiel. La sphère creuse qui forme la première électrode est remplie d'un gaz d'ionisation. La détection des neutrons se fait par l'ionisation des particules de gaz qui produisent alors un ion chargé positivement et un électron chargé négativement. Le champ électrique appliqué entre les électrodes permet :
- de faire dériver les électrons créés par l'ionisation du gaz jusqu'à la bille en créant un champ radial et
- de produire une avalanche à proximité de la bille pour amplifier le signal.

Dans l'art antérieur, le gaz d'ionisation utilisé est le plus souvent de l'Hélium ³He. Dans ce cas, les neutrons sont détectés via la réaction suivante :

³He + n -> H + ³H + Q

avec Q= 764 keV

Un tel détecteur à l'hélium permet essentiellement de détecter des neutrons thermiques, c'est-à-dire des neutrons dont l'énergie est inférieure à 100 meV mais ne présente pas une bonne efficacité pour les neutrons rapides c'est-à-dire les neutrons dont l'énergie est supérieure à 1 MeV.

Dans l'art antérieur, le gaz d'ionisation peut également être du trifluorure de bore BF₃. Dans ce cas, les neutrons sont détectés via la réaction suivante :

¹⁰B + n -> ⁷Li + alpha + Q

avec Q= 2.31 MeV.

Toutefois, l'hélium et le triflorure de bore sont soit très chers soit toxiques.

Par ailleurs, il est connu de l'état de la technique les documents WO 2012/115516 A2 et EP 2 290 405 A1, qui concernent les chambres d'ionisation sphériques. Le document '156 concerne le détection de rayonnement gamma et le document '405 concerne le détection des neutrons à la fois rapides et lents.

### EXPOSE DE L'INVENTION

L'invention vise à remédier aux inconvénients de l'état de la technique en proposant un détecteur de neutrons qui permette à la fois de détecter des neutrons thermiques et des neutrons rapides et qui soit moins cher et moins dangereux que les détecteurs de l'art antérieur.

Pour ce faire, l'invention propose d'utiliser comme gaz d'ionisation le diazote N₂.

Plus précisément, un premier aspect de l'invention concerne un dispositif de détection de neutrons selon la revendication 1, comprenant une première électrode formant une enceinte sphérique contenant une deuxième électrode en forme de bille, l'enceinte étant remplie par un gaz, le gaz comprenant au moins 90 % de diazote.

Ainsi, l'invention propose d'utiliser comme gaz d'ionisation le diazote. En effet, les inventeurs ont constaté de manière surprenante que le diazote était très efficace comme gaz d'ionisation. Pourtant, dans l'art antérieur, il existait un préjugé négatif contre le diazote comme gaz d'ionisation car il est difficile de déclencher une avalanche dans le diazote pur. Toutefois, le fait d'avoir un détecteur sphérique permet d'appliquer des champs électriques suffisamment élevés dans le diazote pour y déclencher une avalanche.

Selon l'invention, le gaz contenu dans l'enceinte formée par la première électrode est un mélange :
- du gaz d'ionisation qui est du diazote, et
- d'un gaz additionnel dit « quencheur ». Le rôle du quencheur est d'absorber les photons éventuels créés lors de l'excitation des molécules de gaz.

Avantageusement, le quencheur est un hydrocarbure, préférentiellement avec moins de 10 atomes de carbone, comme CH₄, C₂H₆, C₄H₁₀ ..., et plus préférentiellement de l'éthane. L'ajout de quelques pourcents d'éthane dans le diazote permet d'améliorer le gain du détecteur. Toutefois, un tel ajout n'est pas bénéfique pour la détection de la capture des neutrons, car les atomes légers comme l'hydrogène produisent des signaux de bruit par collision élastique neutrons-hydrogène.

Ainsi, selon différents modes de réalisation, le gaz contenu dans l'enceinte peut contenir entre 95% et 100% de N₂ et entre 0% et 5% d'hydrocarbure, préférentiellement du C₂H₆.

Avantageusement, le gaz contenu dans l'enceinte est à une pression supérieure ou égale à 500 mbars afin d'avoir une meilleure efficacité pour les faibles flux de neutrons.

En outre, la pression du gaz dans l'enceinte est de préférence inférieure à 5 bars. L'augmentation de la pression impliquant une augmentation de la tension pour garder des performances équivalentes, une trop forte pression pourrait impliquer des problèmes de claquage.

Le dispositif de détection comporte de préférence des premiers moyens de liaison aptes à reliés la première électrode à la masse. La première électrode forme ainsi une cathode.

Le dispositif de détection comporte également de préférence une canne de maintien apte à maintenir la deuxième électrode au centre de l'enceinte sphérique formée par la première électrode. La canne de maintien est de préférence également reliée à la masse.

Le dispositif de détection comporte également de préférence des moyens de mise sous tension aptes à appliquer un potentiel sur la deuxième électrode. La deuxième électrode forme ainsi une anode. Ces moyens de mise sous tension sont de préférence reliés à la deuxième électrode via des seconds moyens de liaison. Les seconds moyens de liaison sont de préférence situés à l'intérieur de la canne de maintien.

Avantageusement, la deuxième électrode présente un diamètre inférieur à 1 cm, de préférence inférieur à 5 mm, et de manière encore plus préférentielle inférieure à 1 mm. En effet, plus le diamètre de la deuxième électrode est faible, plus des champs électriques élevés peuvent être obtenus dans l'enceinte sphérique, et donc plus il est facile de déclencher des avalanches dans le diazote.

Avantageusement, la première électrode présente un diamètre supérieur à 10 cm. En effet, plus l'enceinte est grande, plus les effets de bord sont limités et plus l'efficacité de détection est grande ; mais si la pression peut être augmentée, le volume pourra rester petit. Par ailleurs, selon l'intensité du flux de neutrons à détecter, la taille de la sphère sera adaptée et sera par exemple d'autant plus grande que le flux sera faible afin d'augmenter les probabilités d'interactions.

Le dispositif de détection peut être utilisé pour détecter des neutrons thermiques, c'est-à-dire des neutrons dont l'énergie est inférieure à 100 meV. Les neutrons thermiques interagissent avec l'azote selon la réaction suivante :

¹⁴N + n -> ¹⁴C + p + Q

avec Q=625.87 keV (Réaction n-p)

Le dispositif de détection peut également être utilisé pour détecter des neutrons rapides, c'est-à-dire des neutrons dont l'énergie est supérieure à 1 MeV. Les neutrons rapides interagissent avec l'azote selon la réaction décrite dans le cas des neutrons thermiques, mais également selon la réaction suivante :

¹⁴N + n -> ¹¹B + α-Q

avec Q=158 keV (Réaction n-a)

L'invention concerne également l'utilisation du dispositif de détection pour détecter quelle réaction n-p ou n-a se produit. Pour cela, il est possible de mesurer le temps de montée du signal en fonction de l'énergie du neutron incident.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique en coupe d'un dispositif de détection selon un mode de réalisation de l'invention ;
- La figure 2, la section efficace des neutrons rapides vis-à-vis de l'azote en fonction de l'énergie des neutrons rapides ;
- La figure 3a, le temps de montée du signal mesuré par un dispositif selon un mode de réalisation de l'invention lorsqu'il reçoit un flux de neutrons issus d'une source de ²⁵²Cf en fonction de l'amplitude de ce flux de neutrons ;
- La figure 3b, le spectre d'amplitude dans des convertisseurs analogiques numériques reliés à un dispositif de détection selon l'invention rempli de diazote pur à 500 mbars qui est soumis à un flux de neutrons issu d'une source de ²⁵²Cf ;
- La figure 4a, le temps de montée du signal en fonction de l'amplitude d'un flux de neutrons atmosphérique mesuré dans un dispositif selon un mode de réalisation de l'invention contenant du diazote pur à 500 mbar ;
- La figure 4b, le spectre d'amplitude dans des convertisseurs analogiques numériques reliés à un dispositif de détection selon l'invention rempli de diazote pur à 500 mbars qui est soumis à des neutrons atmosphériques ;
- La figure 5, une comparaison des sections efficaces des réactions ³He(n,p)³H, ¹⁰B(n,α)⁷Li, ¹⁴N(n,p)¹⁴C and ¹⁴N(n,α)¹¹B pour des neutrons rapides dont l'énergie est inférieure à 20 MeV ;
- La figure 6, une représentation de la projection sur le rayon de la première électrode des énergies déposées par tous les produits de capture des neutrons.

Pour plus de clarté, les éléments identiques ou similaires sont repérés par des signes de références identiques sur l'ensemble des figures.

### DESCRIPTION DETAILLEE D'AU MOINS UN MODE DE REALISATION

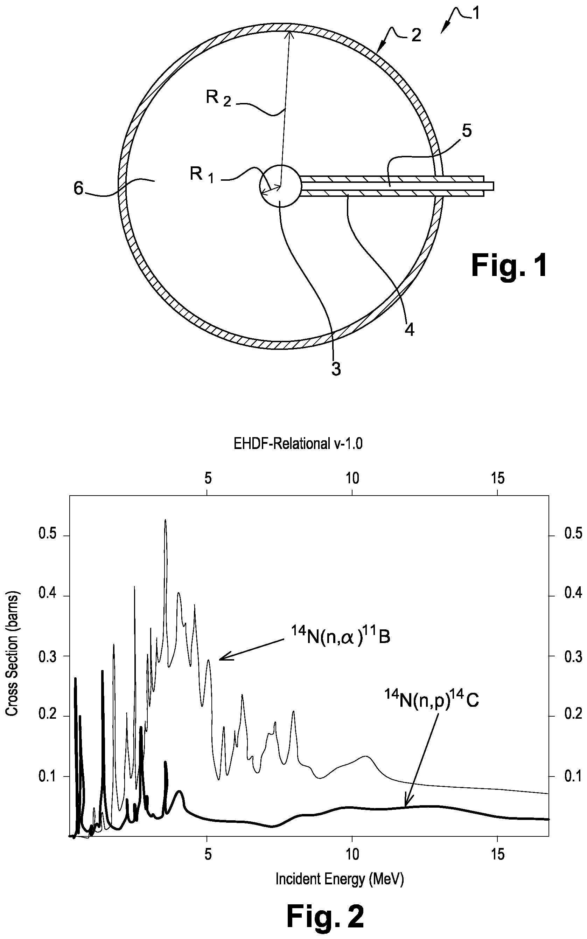

La figure 1 représente un dispositif de détection 1 selon un mode de réalisation de l'invention. Ce dispositif de détection 1 comporte une première électrode 2 formant une enceinte 6 en forme de sphère. La première électrode 2 reliée à la masse de façon à former une cathode. La première électrode 2 est de préférence formée d'une sphère de cuivre. Elle présente de préférence un diamètre supérieur à 1 m. Ainsi, dans ce mode de réalisation, la première électrode présente un diamètre de 1.3 m. La paroi en cuivre formant la première électrode présente une épaisseur de 6 mm.

Le dispositif de détection comporte également une deuxième électrode 3 formée par une bille. Cette bille est réalisée en acier inoxydable. Dans ce mode de réalisation, la bille présente un diamètre de 14 cm.

La deuxième électrode 3 est maintenue au centre de la première électrode 2 grâce à une canne de maintien 4. La canne de maintien 4 est également réalisée en acier inoxydable. La surface extérieure de la canne de maintien 4 est également reliée à la masse. En outre, la canne de maintien 4 est creuse, et elle est traversée par des moyens de liaison 5 permettant de placer la deuxième électrode au potentiel voulu. La seconde électrode 3 est ainsi mise sous tension de façon à former une anode. Les moyens de liaison 5 permettent de contrôler le champ électrique appliqué dans l'enceinte 6 en contrôlant le potentiel de la deuxième électrode.

Lors de la mise en route du dispositif de détection selon l'invention, l'enceinte 6 formée par la première électrode est pompée, de façon à atteindre un vide satisfaisant. Le vide atteint peut ainsi aller jusqu'à 10⁻⁸ mbar. L'enceinte 6 est ensuite remplie par un gaz à une pression allant de 500 mbar à 5 bars. Un dégazage à 10⁻⁹ mbars/s est nécessaire pour la stabilité de l'amplification car la présence d'oxygène dans l'enceinte modifie les caractéristiques du détecteur. Le gaz injecté dans l'enceinte comporte un gaz d'ionisation et il peut aussi comporter un quencheur. Le gaz d'ionisation est du diazote. Le quencheur, quand il est présent, est un hydrocarbure, préférentiellement avec moins de 10 atomes de carbone, comme CH₄, C₂H₆, C₄H₁₀ ..., et plus préférentiellement de l'éthane. Ainsi, selon différents modes de réalisation, le gaz injecté dans l'enceinte 6 peut être du diazote pur ou bien un mélange de diazote et d'hydrocarbures.

Lors du fonctionnement du détecteur, un champ électrique est appliqué entre la première électrode et la seconde électrode. Ce champ électrique est contrôlé en contrôlant le potentiel de la deuxième électrode, tandis que la première électrode est reliée à la masse.

Lorsque des neutrons pénètrent dans l'enceinte 6, ils arrachent des électrons aux atomes d'azote et produisent soit des protons, soit des particules a, qui en ralentissant dans le gaz produisent des ions chargés positivement et des électrons chargés négativement. Les électrons sont attirés par la première électrode. Une avalanche a lieu à quelques millimètres de la deuxième électrode et les ions positifs qui se dirigent vers la première électrode induisent un pulse dans le préamplificateur de charge. Comme l'avalanche a lieu près de la deuxième électrode et que les électrons sont attirés par la première électrode, les ions positifs parcourent une plus grande distance. Par conséquent, le pulse induit dans le préamplificateur est principalement dû au mouvement des ions. Les électrons produits pendant l'avalanche ont une contribution négligeable dans le signal.

Ce phénomène peut permettre de détecter des neutrons thermiques et des neutrons rapides.

La section efficace des neutrons thermiques, c'est-à-dire des neutrons dont l'énergie est inférieure à 100 meV, est de 1.83 barns. Lorsque des neutrons thermiques pénètrent dans l'enceinte 6, ils réagissent avec les noyaux de ¹⁴N du diazote selon la réaction suivante :

¹⁴N + n -> ¹⁴C + p + Q

avec Q=625.87 keV (Réaction n-p)

L'énergie Q de la réaction est partagée entre ¹⁴C et le proton p. Ainsi, l'atome de carbone ¹⁴C est pourvu d'une énergie E_{c}=41.72 keV, tandis que le proton est pourvu d'une énergie Eₚ=684.15keV. Du fait de l'énergie et du parcours des protons dans le gaz de l'enceinte, le signal obtenu avec le détecteur 1 est essentiellement dû aux protons, notamment en ce qui concerne le temps de montée et la largeur du signal.

Le détecteur 1 peut également permettre de détecter des neutrons rapides, c'est-à-dire des neutrons dont l'énergie est supérieure à 1 MeV. La section efficace des neutrons rapides dans le diazote est représentée sur la figure 2. Comme on peut le voir sur la figure 2, les neutrons rapides réagissent aussi avec les noyaux d'azote selon la réaction ¹⁴N(n,p)¹⁴C:

¹⁴N + n -> ¹⁴C + p + Q

avec Q=625.87 keV (Courbe ¹⁴N(n,p)¹⁴C)

Toutefois, comme on peut le voir sur la figure 2, les neutrons rapides dont l'énergie est supérieure à 2 MeV réagissent principalement avec les noyaux d'azote selon la réaction ¹⁴N(n, α)¹¹B :

¹⁴N + n -> ¹¹B + α-Q

avec Q=158 keV (Courbe ¹⁴N(n, α)¹¹B)

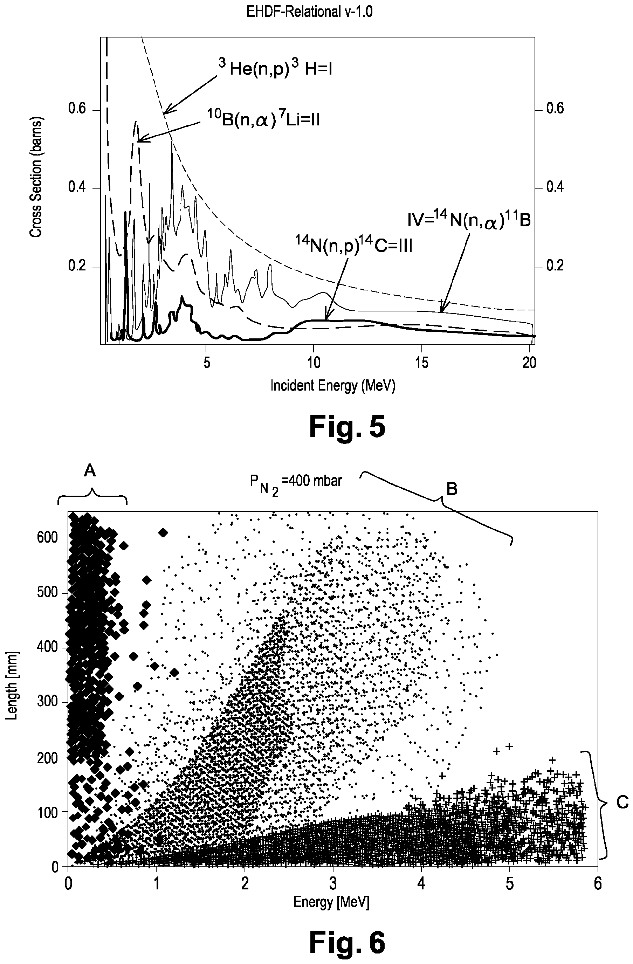

Pour certaines énergies, les neutrons seront détectés grâce aux deux réactions, ce qui peut induire une certaine confusion dans la mesure de l'énergie incidente des neutrons. Cette confusion n'est pas un obstacle aux hautes énergies où son effet se réduit fortement. Par ailleurs, pour les énergies intermédiaires, il est possible de discriminer les deux réactions en mesurant le temps de montée du signal, en fonction de l'énergie du neutron incident. La figure 6 représente une projection sur le rayon de la première électrode des énergies déposées par tous les produits de capture des neutrons. La figure 6 correspond à une simulation d'une distribution plate de neutrons d'une énergie allant jusqu'à 20 MeV qui traverse un dispositif ne faisant pas partie de l'invention. Ce dispositif comporte une première électrode présentant un rayon de 65 cm remplie de diazote pur à une pression de 400 mbar. Cette projection, qui reflète le temps de montée du signal mesuré, est présentée en fonction de l'énergie des neutrons : la zone A correspond aux particules a, la zone B correspond aux protons. Comme représenté sur cette figure, la longueur de la projection est systématiquement nettement plus élevée pour les protons produits par l'interaction n-p. Ceci permet d'avoir une bonne discrimination des produits obtenus suite à l'interaction du gaz avec les neutrons et donc une meilleure estimation du flux de neutrons en fonction de l'énergie.

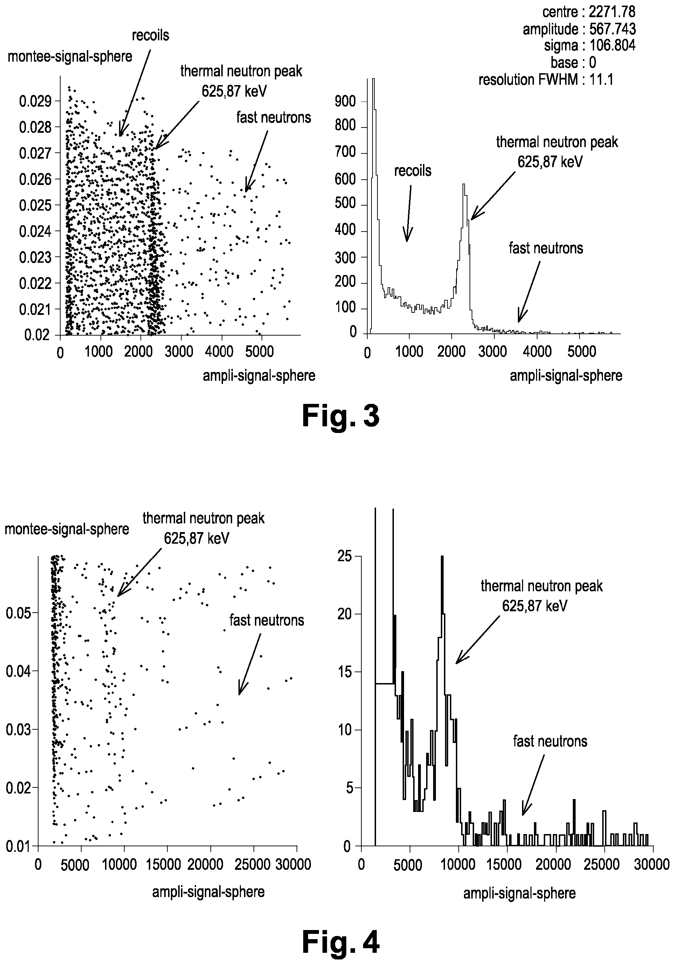

Les figures 3a et 3b représentent les résultats obtenus avec un dispositif analogue à celui de la figure 1 dont l'enceinte 6 est remplie avec un mélange de N₂ à 200 mbar et de C₂H₆ à 10 mbar, irradié par une source de ²⁵²Cf. La figure 3a représente le temps de montée du signal en fonction de l'amplitude et la figure 3b représente le spectre d'amplitude dans des convertisseurs analogiques numériques. Le signal correspondant aux neutrons thermiques forme un pic à 625.87 keV. Ce pic est uniquement dû à la réaction ¹⁴N(n,p)¹⁴C. Ce pic est bien séparé de la partie du signal (nommée « recoil » sur les figures) qui correspond au recul des particules et aux rayons cosmiques, ce qui permet de calculer facilement le flux des neutrons thermiques. Le signal dû aux neutrons rapides est désigné sur les figures par « fast neutrons ». Ce signal est dû aux deux réactions (n, p) et (n, α). Comme représenté sur les figures 3a et 3b, le recul du noyau produit par les neutrons rapides produit peu d'énergie et un signal de temps de montée du signal faible.

Le dispositif de détection de neutrons selon l'invention peut également permettre de détecter des neutrons atmosphériques. Pour cela, un détecteur semblable à celui de la figure 1 mais rempli de diazote pur à une pression de 500 mbar a été utilisé. Les résultats obtenus après 15 heures d'acquisition sont représentés sur les figures 4a et 4b. Comme on peut le voir sur ces figures, le signal correspondant aux neutrons thermiques (thermal neutrons peak) apparait clairement sur les figures, tandis que le signal correspondant aux neutrons rapides est plus diffus.

La figure 5 compare les résultats obtenus avec :
- I- Un détecteur cylindrique de l'art antérieur rempli de ³He dans lequel les neutrons sont détectés via la réaction ³He(n,p)³H
- II- Un détecteur cylindrique de l'art antérieur rempli de ¹⁰BF₃ dans lequel les neutrons sont détectés via la réaction ¹⁰B(n,α)⁷Li ;
- III- Un détecteur sphérique selon un mode de réalisation rempli N₂ pur à 500 mbar dans lequel les neutrons sont détectés via la réaction ¹⁴N(n, p)¹⁴C ;
- IV- Un détecteur sphérique selon un mode de réalisation rempli N₂ pur à 500 mbar dans lequel les neutrons sont détectés via la réaction ¹⁴N(n, α)¹¹B.

Comme représenté sur la figure 5, pour les neutrons thermiques, N₂ a une section efficace plus faible que ³He et BF₃ mais cet inconvénient peut être compensé en injectant plus d'atomes de diazote dans l'enceinte. Par ailleurs, pour les neutrons rapides, N₂ a une section efficace équivalente à celle de ³He et de BF₃.

L'utilisation de diazote comme gaz d'ionisation permet donc d'avoir un gaz moins cher et moins toxique que les gaz utilisés dans l'art antérieur tout en ayant des performances pour le détecteur équivalentes à celles des détecteurs de l'art antérieur.

Naturellement, l'invention n'est pas limitée aux modes de réalisation décrits en référence aux figures et des variantes pourraient être envisagées sans sortir du cadre de l'invention, qui est définie par les revendications annexées. Par exemple, les dimensions données dans les exemples de réalisation pour les électrodes pourraient varier, tout comme les matériaux constitutifs des électrodes et de la canne de maintien.

## Revendications

1. Dispositif de détection (1) de neutrons comprenant une première électrode (2) formant une enceinte (6) sphérique contenant une deuxième électrode (3) en forme de bille, l'enceinte (6) sphérique étant remplie par un gaz, le dispositif de détection étant **caractérisé en ce que** le gaz est un mélange de diazote et d'un hydrocarbure, **caractérisé en ce que** le mélange comprend au moins 90 % de diazote.

2. Dispositif de détection (1) selon la revendication 1, dans lequel le mélange contient entre 95% et 100% de N₂ et entre 0% et 5% de l'hydrocarbure, préférentiellement avec moins de 10 atomes de carbone, et plus préférentiellement de l'éthane.

3. Dispositif de détection (1) selon l'une des revendications précédentes, dans lequel le gaz est à une pression dans l'enceinte supérieure ou égale à 500 mbars.

4. Dispositif de détection (1) selon l'une des revendications précédentes, dans lequel la deuxième électrode (3) présente un diamètre inférieur à 1 cm, de préférence inférieur à 5 mm.

5. Dispositif de détection selon l'une des revendications précédentes, dans lequel la première électrode (2) présente un diamètre supérieur à 10 cm.

6. Utilisation du dispositif de détection (1) selon l'une des revendications 1 à 5 pour détecter des neutrons dont l'énergie est inférieure à 100 meV et des neutrons dont l'énergie est comprise entre 1 MeV et 20 MeV, ladite utilisation comprenant une estimation d'un flux de neutrons en fonction de l'énergie des neutrons détectés.

7. Utilisation du dispositif de détection (1) selon l'une des revendications 1 à 5 pour détecter des neutrons dont l'énergie est inférieure à 100 meV et des neutrons dont l'énergie est comprise entre 1 MeV et 20 MeV, ladite utilisation comprenant une identification du type de réaction, n-p ou n-a, qui se produit dans le détecteur, en mesurant un temps de montée d'un signal de mesure délivré par le détecteur, en fonction d'une énergie du neutron détecté.

## Patentansprüche

1. Detektionsvorrichtung (1) von Neutronen, umfassend eine erste Elektrode (2), die eine sphärische Einfassung (6) formt, die eine zweite Elektrode (3) in Kugelform enthält, wobei die sphärische Einfassung (6) mit einem Gas gefüllt ist, wobei das Gas eine Mischung aus Distickstoff und einem Kohlenwasserstoff ist, **dadurch gekennzeichnet, dass** die Mischung wenigstens 90 % Distickstoff umfasst.

2. Detektionsvorrichtung (1) gemäß Anspruch 1, bei der die Mischung zwischen 95 % und 100 % N₂ und zwischen 0 % und 5 % Kohlenwasserstoff, bevorzugt mit weniger als 10 Kohlenstoffatomen und weiter bevorzugt mit Ethan enthält.

3. Detektionsvorrichtung (1) gemäß einem der voranstehenden Ansprüche, bei der das Gas unter einem Druck in der Einfassung von mehr als oder gleich 500 mbar steht.

4. Detektionsvorrichtung (1) gemäß einem der voranstehenden Ansprüche, bei der die zweite Elektrode (3) einen kleineren Durchmesser als 1 cm, bevorzugt kleiner als 5 mm aufweist.

5. Detektionsvorrichtung gemäß einem der voranstehenden Ansprüche, bei dem die erste Elektrode (2) einen größeren Durchmesser als 10 cm aufweist.

6. Verwendung der Detektionsvorrichtung (1) gemäß einem der Ansprüche 1 bis 5 zum Detektieren Neutronen, deren Energie geringer ist als 100 meV und Neutronen, deren Energie zwischen 1 MeV und 20 MeV inbegriffen ist, wobei die genannte Verwendung eine Schätzung eines Neutronenstroms in Abhängigkeit von der Energie der detektierten Neutronen umfasst.

7. Verwendung der Detektionsvorrichtung (1) gemäß einem der Ansprüche 1 bis 5 zum Detektieren Neutronen, deren Energie geringer ist als 100 meV und Neutronen, deren Energie zwischen 1 MeV und 20 MeV inbegriffen ist, wobei die genannte Verwendung eine Identifizierung des Reaktionstyps n-p oder n-a, umfasst, die in dem Detektor erfolgt, indem eine Anstiegszeit eines Messsignals gemessen wird, das von dem Detektor in Abhängigkeit einer Energie des detektierten Neutrons ausgegeben wird.

## Claims

1. A device for detecting (1) neutrons comprising a first electrode (2) forming a spherical enclosure (6) containing a second ball-shaped electrode (3), the spherical enclosure (6) being filled with a gas, the gas being a mixture of dinitrogen and of an hydrocarbon, **characterized in that** the gas comprises at least 90% dinitrogen.

2. The detecting device (1) according to claim 1, wherein the gas contains between 95% and 100% N₂ and between 0% and 5% of the hydrocarbon, preferentially with fewer than 10 carbon atoms, and more preferentially ethane.

3. The detecting device (1) according to one of the preceding claims, wherein the gas is at a pressure in the enclosure equal to or higher than 500 mbar.

4. The detecting device (1) according to one of the preceding claims, wherein the second electrode (3) has a diameter lower than 1 cm, preferably lower than 5 mm.

5. The detecting device according to one of the preceding claims, wherein the first electrode (2) has a diameter higher than 10 cm.

6. A use of the detecting device (1) according to one of claims 1 to 5, for detecting neutrons the energy of which is lower than 100 meV and neutrons the energy of which is between 1 MeV and 20 MeV, said use comprising an estimate of a flux of neutrons as a function of the energy of the detected neutrons.

7. A use of the detecting device (1) according to one of claims 1 to 5, for detecting neutrons the energy of which is lower than 100 meV and neutrons the energy of which is between 1 MeV and 20 MeV, said use comprising an identification of a type of reaction, n-p or n-a occurring in the detecting device, by measuring a rise-up time of a measure signal outputted by the detecting device, as a function of an energy of the detected neutron.
